# EUROPEAN PATENT SPECIFICATION

(11) **EP 3 825 090 B1**
(45) Date of publication and mention of the grant of the patent: **26.03.2025**
(21) Application number: 20208646.8
(22) Date of filing: 19.11.2020
(51) Int. Cl.: B29C 43/38, B29C 45/56, B29C 45/37, B29C 33/00, F16J 15/328, B29C 43/02, F16J 15/3236, B29C 33/46, B29C 43/50, B29C 45/26, B29L 31/26, B29K 19/00

(54) **METHOD AND MOULD FOR MAKING CYLINDRICAL GASKETS**
VERFAHREN UND WERKZEUG ZUR HERSTELLUNG VON ZYLINDRISCHEN DICHTUNGEN
PROCÉDÉ ET MOULE POUR LA FABRICATION DE JOINTS CYLINDRIQUES

(30) Priority: 19.11.2019 IT 201900021639
(43) Date of publication of application: 26.05.2021
(73) Proprietor: ELLEGI S.p.A., 24064 Grumello del Monte (BG) (IT)
(72) Inventor: CUCCHI, Emanuele, 24064 Grumello del Monte (BG) (IT)
(74) Representative: Marietti, Andrea

(56) References cited:
- US-A1- 2004 099 994
- US-A1- 2008 277 879
- US-A1- 2010 244 322

## Description

### Field of the Invention

The present invention refers to the field of moulding tubular or cylindrical gaskets, in particular of the type that can be sealingly used in a mechanism of the cylinder and piston type, such as oil dampers.

More in detail, the present invention relates to a method, and a respective mould for moulding, preferably by injection under pressure or by compression, a substantially cylindrical gasket with a variously and generically annular section of the type comprising outer and inner sharp-corner lips that seal mechanically and fluidically.

### State of the prior art

It is known art to make substantially cylindrical, i.e. tubular, gaskets with annular corners jutting internally and externally, which are intended to be stably housed within a respective seat provided in the cylinder of a device, for example a damper, of the cylinder and piston (plunger) type, in such a way as to engage, within its axial cavity, the plunger sliding with respect to the cylinder, in order to prevent the leakage of oil, or other fluid, present in a similar device.

To optimize the tightness, both mechanic, with respect to the cylinder seat, and fluidic, with respect to the plunger stem, it is known to equip such type of gasket with annular lips, i.e. corners jutting circumferentially, both externally and internally, which are intended to engage respectively the inner wall of the aforesaid seat and the plunger stem.

The implementation of such a substantially cylindrical gasket commonly occurs in a mould for injection or compression moulding of preferably polymeric materials of the type comprising a movable part and a fixed part, which can be coupled to each other in abutment along a closing surface, in addition to known means for injecting or delivering such moulding material into the mould, in the case of injection moulding, or to known means for feeding the moulding material, in the case of compression moulding.

Due to the presence, on such type of gasket, of annular portions jutting both internally and externally to form the aforesaid lips, it is obvious that the closing surface of the movable and fixed parts of the mould is shaped so that it passes through the impressions of such lips, which are thus partially made in the movable mould and partially in the fixed mould, to avoid the presence of undercuts that are complex and inconvenient to make, which however result in difficulties in extracting the gasket.

This solution, although effective in the production of this type of gaskets, however, results in the frequent need of having to finish the aforesaid lips of each gasket, once they have been extracted from the mould. In fact, such lips thus achieved are not free from moulding burrs or inaccuracies, and consequently, to ensure the tightness of the gasket, they must often be finished, for example through material removal machining (such as blanking, cryogenic deburring, grinding, cutting or more).

As an alternative to such solution, it is possible to provide a mould in multiple parts arranged side by side, of which a central part interposed between the movable part and the fixed part comprises the impressions of such jutting annular portions of the gasket (lips). In this type of mould, such central part can be removed, for example transversely with respect to the axis of the mould and therefore of the gasket, before fully opening the same mould, thus facilitating the extraction of the gasket.

In this case, the lips normally do not require further finishing work and, however, the mould thus shaped turns out to be difficult to make and inconvenient to use in the respective moulding method, in addition to being considerably expensive. US2010244322A1, US2008277879A1 and US2004099994A1 disclose known methods and moulds for manufacturing cylindrical gaskets.

### Brief summary of the invention

It is an object of the present invention to provide a moulding method and a respective mould for a gasket of the type set forth above, which does not show the disadvantages of the known prior art.

It is another object of this invention to implement a moulding method and a respective mould, which allows to make substantially cylindrical gaskets equipped with sealing jutting lips, which are dimensionally precise and do not require further finishing work.

Finally, it is a further object of this invention to describe a moulding method and a respective mould for a cylindrical gasket with sealing lips, which allow the effective and economic implementation of such type of gaskets.

These and other objects are achieved by the moulding method according to the first independent claim, with the respective dependent claims, and by the mould according to the eighth independent claim, with the respective dependent claims.

According to the present invention, it is provided a method for producing at least one substantially cylindrical gasket, preferably with a generally annular section, of the type comprising, along the axis of symmetry of the same gasket, a base end and a top end joined reciprocally by an outer, substantially longitudinally extending, side surface and by an inner, also substantially longitudinally extending, side surface, a first annular lip jutting externally from the outer side surface and a second annular lip jutting internally from the inner side surface, which comprises in sequence the steps of:
- preparing a mould with a fixed part and a movable part, which can be coupled to each other in abutment along a closing surface;
- closing the mould by sealingly coupling the fixed part and the movable part of the mould to one another;
- moulding, for example by injection or compression, a moulding material between the fixed part and the movable part of the mould to make said gasket;
- opening the mould by separating the respective fixed part from the movable part;
- removing the moulded gasket;
and wherein the fixed part, or vice versa the movable part, of the mould comprises at least one housing cavity of the moulding material and the movable part, or vice versa the fixed part, of the mould comprises at least one clamping portion, preferably flat or convex, complementary to the aforesaid housing cavity, wherein said at least one housing cavity is formed within a single solid body.

Such moulding method advantageously provides that the aforesaid closing surface, comprising at least the aforementioned clamping portion, delimits at least the top end of the gasket defined by such at least one housing cavity.

This way, as the person skilled in the art may well appreciate, the engravings of the mould related to making the so-called jutting annular lips are made in the mould housing cavity formed, preferably, but not necessarily, from solid, in only one of the fixed or movable parts of the same mould, i.e. in a single solid body, so that they, not being arranged at the closing surface of said fixed and movable parts of the mould, do not give rise to annular lips that must be finished because, for example, they are equipped with entirely undesired burrs.

Thus, according to a preferred aspect of the present invention, the housing cavity of the moulding material, which is preferably a polymeric material, such as a nitrile rubber (NBR), comprises at least one undercut extending circumferentially for making said externally- jutting first lip, and/or at least one undercut extending circumferentially for making said internally-jutting second lip.

Obviously, also this undercut, or undercuts, are made in a single solid body, from solid, without the need or presence of cores or modular parts of the mould, adapted to define this undercut or undercuts. In fact, this undercut or undercuts are engravings inside the moulding cavity made in a single solid body, which are defined, with respect to the extraction direction of the moulded object, by at least two walls placed on planes transverse to the aforesaid extraction direction of the moulded object.

It should be noted that, according to a further aspect of the method described here, the aforesaid step of moulding a moulding material is preferably selected from a step of injection moulding, comprising a step of injecting under pressure, or sending, a moulding material in the fluid state within the mould after the aforesaid step of closing the mould, and a compression moulding step, comprising a step of feeding a moulding material between the fixed part and the movable part of the mould before the aforesaid step of closing the mould.

According to another aspect of the present invention, the mould may comprise a plurality of housing cavities to house the moulding material (for example, a nitrile rubber) and a corresponding plurality of clamping portions, complementary to such cavities, in order to simultaneously produce a plurality of gaskets. In this case, such mould comprises at least one concave portion connected, when the mould is closed, to the aforesaid plurality of housing cavities, in such a way as to make, at the end of the step of injecting under pressure, or delivering, the moulding material, a support made in one piece with such plurality of gaskets.

The implementation of a mould equipped with a plurality of housing cavities of the moulding material in order to simultaneously make a plurality of gaskets obviously allows to increase the productivity of the moulding method.

According to a further aspect of the present invention, the step of removing one or more of the gaskets from the respective housing cavities of the mould may comprise a step of emitting a jet of compressed air at such gaskets.

This allows to facilitate the detachment of the gaskets from the respective housing cavities of the mould, even in the presence of undercuts.

A further aspect of the present invention relates to a mould for making at least one substantially cylindrical gasket, preferably with a generally annular section, of the type comprising, along the axis of symmetry of the same gasket, a base end and a top end joined together both by an outer, substantially longitudinally extending, side surface and by an inner, also substantially longitudinally extending, side surface, a first annular lip jutting externally from the outer side surface of the gasket and a second annular lip jutting internally from the inner side surface. Such mould comprises a fixed part and a movable part, which can be coupled to each other in abutment along a closing surface, in which such fixed part, or vice versa such movable part, of the mould comprises at least one housing cavity to house the moulding material, made in a single solid body (preferably, but not necessarily, from solid) and bearing the negative shape of the gasket to be moulded, and said movable part of the mould, or vice versa said fixed part, comprises at least one flat or convex clamping portion, complementary to the aforesaid at least one housing cavity. Advantageously, the aforesaid closing surface of the mould comprises at least the aforesaid clamping portion and delimits the top end of the gasket defined by the corresponding housing cavity.

Such solution, as stated, allows to achieve some gaskets of the type set forth herein, which are equipped with sealing jutting annular lips that do not require further finishing work before the installation of the respective gasket.

According to the preferred embodiments, the aforesaid gaskets preferably have a maximum outer diameter in the range of 2mm - 32mm.

In a preferred embodiment of such a mould, the aforesaid housing cavity of the moulding material, made in a single solid body, preferably but not necessarily from solid, comprises at least one undercut extending circumferentially along a side wall of such cavity, in order to allow the aforementioned externally-jutting first lip and/or at least one undercut, which extends circumferentially along another side wall of the same cavity, to be made, in order to allow the aforesaid internally-jutting second lip to be made.

According to the preferred embodiments, as far as the aforesaid internally-jutting lip is concerned, the inner angle formed by the two sides of the lip that constitute its vertex (angled edge) is preferably in the range of 20° - 120°.

According to a further embodiment of the present invention, the mould may comprise a plurality of housing cavities to house the moulding material and a corresponding plurality of clamping portions complementary to said cavities, in such a way as to be able to simultaneously produce a plurality of gaskets.

According to a preferred embodiment, such a mould with multiple housing cavities of the moulding material may further comprise at least one concave portion connected, when the mould is closed, to such plurality of housing cavities, for making, at the end of the moulding step, for example by injection or compression, a moulding material of a support for the aforementioned plurality of gaskets, which is made in one piece with such gaskets.

According to the preferred embodiments, the aforesaid support is preferably made in a substantially "disk-like" shape with a maximum diameter of the outer perimeter of the "disk-shaped" impression within the range of 50mm - 450mm.

### Brief Description of the Drawings

Further characteristics and advantages of the invention, together with the same invention, can be better understood through the following detailed description carried out, by way of example only, with the aid of the accompanying drawings, wherein:
- Fig. 1 shows an enlarged view of a portion of the cross-section of a mould for forming an annular-planform cylindrical gasket according to a preferred aspect of the present invention;
- Fig. 2 shows a cross-sectional view of the gasket achieved through the mould according to a preferred aspect of the present invention;
- Fig. 3 shows a plan view of the movable part, a section along the A-A line depicted and an enlarged view of some details of a mould according to a further embodiment of the present invention;
- Fig. 4 shows a cross-sectional view of a detail of the gasket and support moulded in one piece by the mould according to another aspect of the present invention;
- Fig. 5 shows a photographic representation of a plurality of gaskets joined by the support moulded in one piece by the mould, according to yet another aspect of the present invention;
- Fig. 6 shows a three-dimensional representation of the cross-section of the finished gasket achieved by a mould according to an embodiment of the present invention.

### Detailed Description of a Preferred Embodiment

The invention will now be described, with reference to the accompanying figures, according to a preferred embodiment.

It is hereby intended that such invention relates to a mould, and a related moulding method, for making a gasket, preferably of polymeric material, which is substantially cylindrical with a generally annular section, of the type preferably usable in fluidic pistons and cylinders, for example silicone oil springs or dampers, of the type equipped, along the axis of symmetry of the same gasket, with a base end and a top end joined together by an outer, substantially longitudinally extending, side surface and by an inner, also substantially longitudinally extending, side surface, with a first annular lip jutting externally from the outer side surface and with a second annular lip jutting internally from the inner side surface.

Moreover, it is to be further noted herein that the expression "substantially cylindrical with a generally annular section" means that the gasket to which the present invention refers, is substantially tubular with a central, i.e. almost cylindrical, axis of symmetry and can have a section orthogonal to the respective axis of symmetry, which is annular but variable along such axis of symmetry in its dimensions, so that for example the inner cavity of such gasket can be tapered or even that the outer surface of the gasket can have some irregularities.

Again, as will be explained, it should be noted that the expression according to which the housing cavity of the moulding material is made of "a single solid body" means that such cavity is made of a solid body, preferably but not necessarily starting from solid, so that there is no need to compose multiple bodies, such as cores or carriages, to define such a cavity bearing the impression of the piece to be moulded.

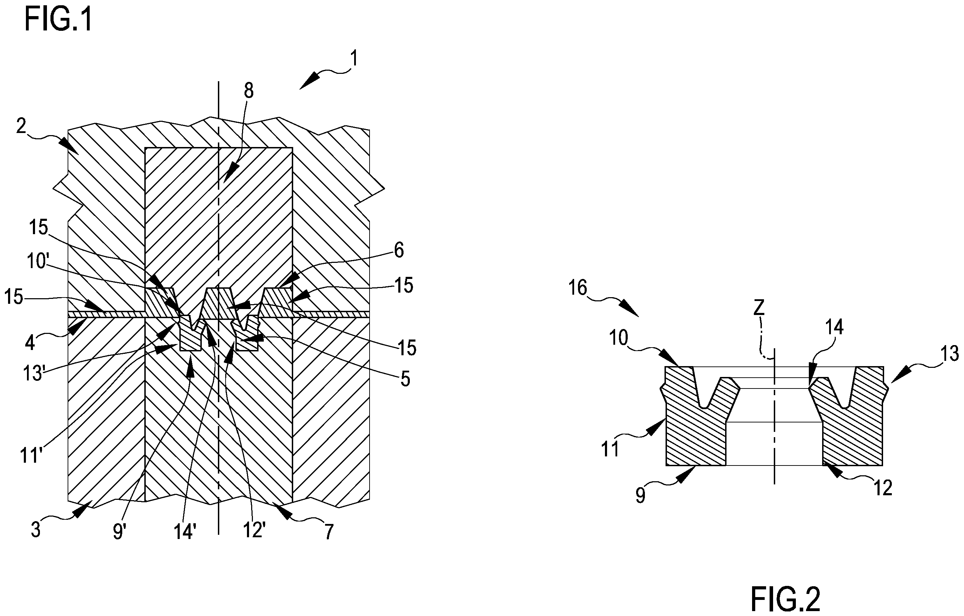

With reference to figure 1, the mould 1 described herein for making an annular gasket, according to an aspect of this invention and in an embodiment thereof, as is known in the art, consists of a fixed part 3 and a movable part 2 and it is configured to be removably inserted into an apparatus for moulding, preferably for injection moulding, a moulding material, such as, and preferably, a suitable polymeric material, such as nitrile rubber (NBR - Nitrile-Butadiene Rubber) or other elastomeric material such as, by way of example, hydrogenated nitrile rubber (HNBR - Hydrogenated Nitrile-Butadiene Rubber), silicone rubber (VMQ - Vinyl Methyl Silicone), fluorinated rubber (FKM - Fluoroelastomer, Viton^{®}).

As shown in figure 1 and known, the fixed part 3 and the movable part 2 of the mould 1 can be coupled to each other in abutment along a closing surface 4, in such a way as to define a shaped moulding cavity, which is reached by the fluid polymeric moulding material thanks, for example, to a plurality of injectors, known per se and not shown herein, formed in one or both parts 2, 3 that constitute the mould 1.

It should be noted that herein and hereinafter, a method and a respective mould for moulding at least one substantially cylindrical gasket, preferably with a generally annular section, and preferably usable in cylinder and piston mechanisms, will be described, which uses a method for injection moulding a moulding material, usually polymeric/elastomeric, which, as known, provides for the injection under pressure of such material in the fluid state into the mould 1, when the latter is in its closed configuration. However, as the person skilled in the art may appreciate, the method depicted herein - and, unless obvious changes such as the elimination of injection holes, also the respective mould - can be implemented by using a compression moulding method, wherein a moulding material, preferably polymeric/elastomeric, is inserted between the fixed part 3 and the movable part 2 of the mould 1, when obviously the mould 1 is open, so that the closing step of the mould 1 determines the compression moulding of such moulding material.

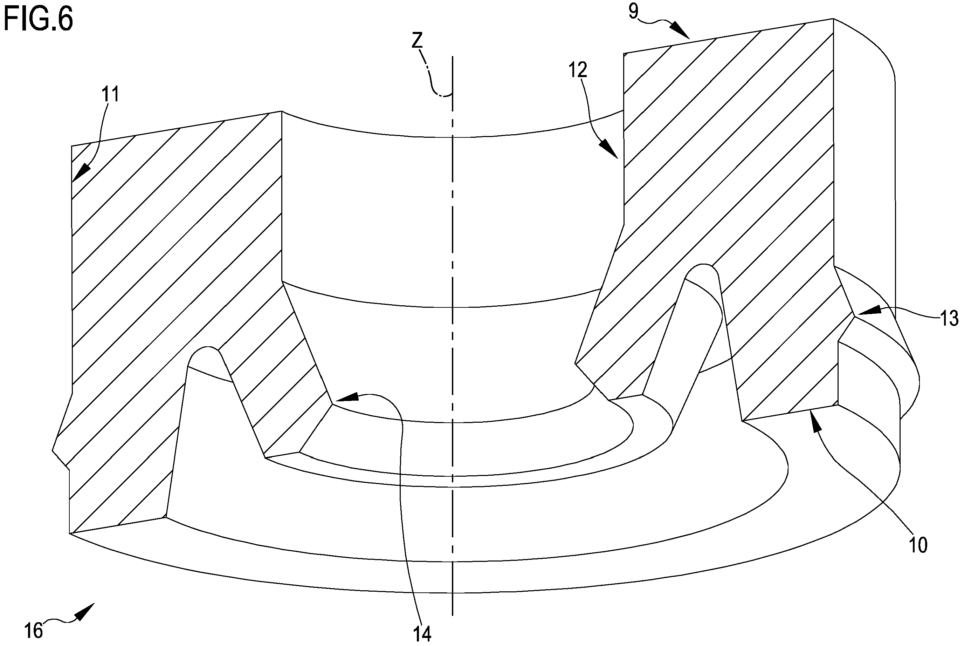

In the embodiment described herein with reference to figure 1, the fixed part 3 of the mould 1 comprises a housing cavity 5 for the moulding material, which will constitute a gasket 16 object of the present invention. On the other hand, the movable part 2 of the mould 1 comprises a flat or convex clamping portion 6 complementary to the aforesaid housing cavity 5 and shaped, as will be explained, to define only the top end of such gasket 10 (in this regard, see figure 2 and figure 6).

In other words, the housing cavity 5 has substantially the negative shape of the gasket 16 to be moulded, while the complementary clamping portion 6 defines the top end of such gasket 16.

Such housing cavity 5 is formed in a single solid body, so that the entire impression of the piece to be moulded, defined by such cavity 5, is made in a continuous solid.

Preferably, but not necessarily, also the clamping portion 6, which can have an impression that defines the top end of the gasket 16, can also be made in a single solid body.

It should be noted that, due the cylindrical symmetry of the gasket 16 to be made, both the movable part 2 and the fixed part 3 of the mould 1, as well as the respective housing cavity 5 and the respective clamping portion 6, also have cylindrical symmetry and therefore have a longitudinal symmetry axis.

It should be noted that, in a preferred embodiment, the fixed part 3 of the mould 1 may comprise a removable insert 7, which includes the housing cavity 5 of the moulding material, and the movable part 2 of the mould 1 may also comprise a removable insert 8 which includes said flat or convex clamping portion 6 complementary to said housing cavity 5.

Thus, in the embodiment illustrated herein, the single solid body within which the housing cavity 5 is made, consists of a removable insert 7, in a single piece, arranged within a support belonging to one of the movable or fixed parts 2, 3 of the mould 1 (in the case depicted, inside the fixed part 3 of the mould 1).

However, as the person skilled in the art may well appreciate, if the part 2 or 3 of the mould 1 in which such cavity 5 is formed is without inserts, this housing cavity 5 is made directly in such part 2 or 3, provided that it is made in a single solid body.

It is to be noted herein that although the accompanying figures and the respective description of the mould 1 refer to an embodiment according to which the housing cavity 5 is formed, or anyway present, in the fixed part 3 of the mould 1 and the respective clamping portion 6 is formed, or present, in the movable part 2 of the mould 1, it is possible to alternatively provide for the presence of the housing cavity 5 in the movable part 2 of the mould 1 and the corresponding presence of the clamping portion 6 in the fixed part 3 of the same mould 1, without thereby departing from the present invention.

Furthermore, the definition of "fixed part" and "movable part" of the mould 1, as will be clear to the one skilled in the art, is entirely conventional and, although reflecting a preferred and normally used embodiment, is therefore not excluded that both parts may be movable with respect to the moulding equipment, preferably by injection under pressure or also by compression, within which the mould 1 is assembled.

With reference now to figure 2 and figure 6, in which a cross-section of a gasket is depicted, which can be achieved with the mould 1 shown in figure 1, it is noted that such gasket 16 is a substantially cylindrical gasket with a generally annular section, with a maximum outer diameter preferably in the range of 2mm-32mm, and with an axis of symmetry denoted as Z, in which, along such axis of symmetry Z, a substantially flat base end 9 and a top end 10 which is developed along a multiform surface, are recognised, which are joined together by an outer, longitudinally extending, side surface 11 and by an inner, also longitudinally extending, side surface 12.

The gasket 16 further comprises a first annular and preferably sharp-corner outer lip 13 or anyway equipped with a jutting tip (or angled edge), which protrudes on the outer side surface 11, and a second, also annular and preferably sharp-corner inner lip 14 or equipped with a jutting tip (or angled edge), the inner angle formed by the two sides of the lip which constitute said jutting tip (or angled edge) preferably being comprised in the range of 20° - 120°, which is formed as protruding on the inner side surface 12. In the particular embodiment of this gasket 16, such outer lip 13 and such inner lip 14 are arranged near the top end 10.

More particularly, this gasket 16 provides that the multiform surface constituting the top end 10 comprises in section, from the outside toward the inside of the same gasket 16, a first outer annular portion, a concavity with a substantially "V"-shaped section and a further inner annular portion. Moreover, the inner side surface 12 is tapered internally toward the axis of symmetry Z, in such a way as to substantially define a truncated-cone portion separated from the first annular portion of the top end 10 thanks to the aforesaid concavity with a substantially "V"-shaped section, equipped internally with the aforesaid second inner lip 14.

It should be noted that, although a gasket has been described herein and made according to a well-specified geometry and as the person skilled in the art will appreciate, any other geometry of such gasket which provides the latter being cylindrical with a generally annular section, even possibly variable along the axis of symmetry, and equipped with the aforesaid outer lip and inner lip, i.e. angled corners or edges, which are annular to achieve the mechanical and fluidic seal of such gasket, can alternatively be made thanks to the mould and the moulding method according to the present invention.

Referring now to the housing cavity 5 of the mould 1 shown herein and intended, together with the respective clamping portion 6, to make the gasket 16, with reference again to figure 1, it is noted that such cavity 5 has a substantially cylindrical shape with an annular planform and comprises, along the axis of symmetry of such cavity 5, a base end 9' and a top end 10' joined by an outer (longitudinally extending) side surface 11' and an inner (longitudinally extending) side surface 12', which are intended to define the respective ends 9, 10 and the corresponding outer and inner side walls 11, 12 of the gasket 16.

The housing cavity 5 shown in figure 1 also has a first undercut 13', i.e. a notch, formed circumferentially along the outer side wall 11', to make the aforesaid first lip 13 jutting from the outermost surface 11 of the gasket 16, and a second undercut 14', i.e. at least one notch, which extends circumferentially on the inner side wall 12' to make the aforesaid second lip 14 jutting onto the innermost surface 12 of the gasket 16.

As stated, such housing cavity 5 is made in a single solid body and, consequently, also such undercuts or at least one of them, 13', 14' are made in such single solid body, in the embodiment shown herein consisting of an insert 7 of one of the movable and fixed parts 2, 3 of the mould 1 (for example, as shown here by way of example, in the fixed part 3).

On the other hand, the clamping portion 6 of the mould 1 has the negative shape of the surface only of the top end 10 and, therefore, has essentially only flat or convex portions, which define such top end 10 of the gasket 16.

Preferably but not necessarily, also such clamping portion 6, with the respective negative shape of the surface of the top end 10, can be made in a single solid body which can be, for example, the aforementioned insert 8 of the movable part 2 of the mould 1.

Also in this case, the person skilled in the art may well appreciate that also such shape of the clamping portion can be directly made in one of the two movable and fixed parts 2, 3 of the mould 1, which constitutes a single solid body, if no insert is present.

The closing surface 4 between the two parts of the mould 1, previously set forth, will therefore comprise the clamping portion 6 previously mentioned, thus delimiting the top end 10 of the gasket 16 defined by the housing cavity 5 comprised in the fixed part 3 of the mould 1, in the particular embodiment of the invention depicted herein.

Thanks to the presence of the undercuts 13', 14' in the cavity 5 of the mould 1, jutting lips 13 and 14 are achieved on the moulded gasket 16, which are particularly well defined, sharp-corner and particularly effective in ensuring the fluidic tightness and mechanical coupling when using such gasket 16 in oil dampers of the piston and cylinder type.

In fact, although it would be more logical to arrange in the mould 1 the impressions corresponding to such jutting lips 13, 14 of the gasket 16 at the closing surface 4 of the movable and fixed parts 2, 3 of the mould 1, in order to avoid the uncomfortable presence of the aforesaid undercuts 13', 14', it has been found that the solution object of the present invention, in which the aforesaid housing cavity 5 of the moulding material, and therefore the respective undercuts 13', 14', is made in a single solid body, allows to improve unpredictably and significantly the quality of the aforesaid lips 13, 14 of such gasket 16.

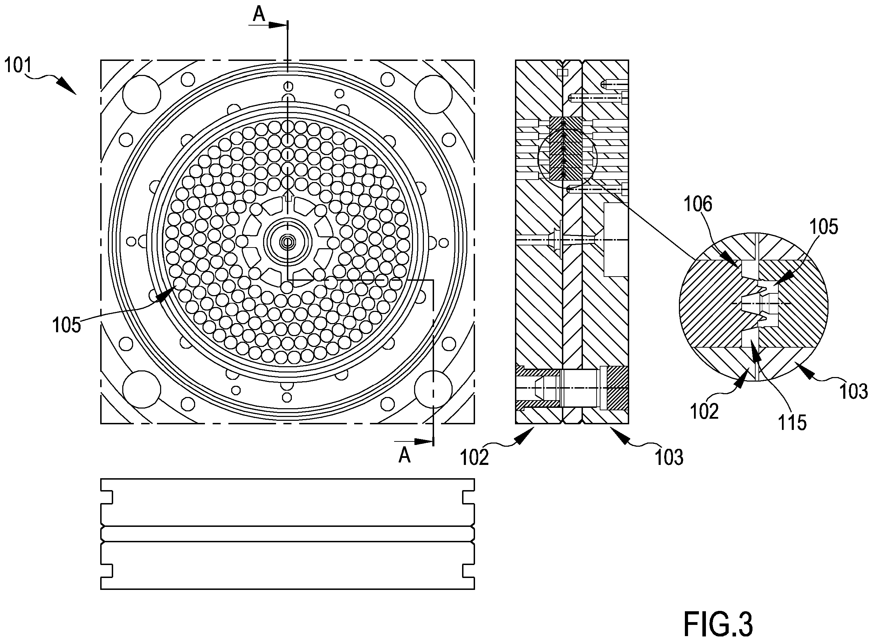

With reference now to figure 3, the mould 101, according to another aspect of the present invention, can also be made in such a way as to comprise a plurality of housing cavities 105 made for example in this case in the fixed part 103 of the same mould 101, and a corresponding plurality of clamping portions 106 complementary to said cavities 105 made in the movable part 102 of this mould 101.

This arrangement is particularly advantageous in the continuous production of gaskets, allowing high productivity with very accurate quality control in relation to dimensional tolerances and possible surface defects.

In this case, one or more concavities 115 may also be present between the clamping portions 106, in such a way as to define, at the end of the moulding step, a supporting portion 15 which joins, and is made in one piece with, the various gaskets 16 produced in the cavities 105.

More particularly, in order to form this support 15 for the plurality of gaskets 16, of the type shown for example in figures 2 and 6, the mould 101, for example in the movable part 102 of the latter, comprises at least one concave portion 115 made in such a way as to join the aforementioned clamping portions 106 of the various cavities 105 so that, once the mould 101 has been closed by joining the respective fixed part 103 with the corresponding movable part 102 and the injection moulding has been carried out (or alternatively, as stated, the compression moulding has been carried out during the mould closing), such support 15 is made and connected in one piece to the plurality of gaskets 16.

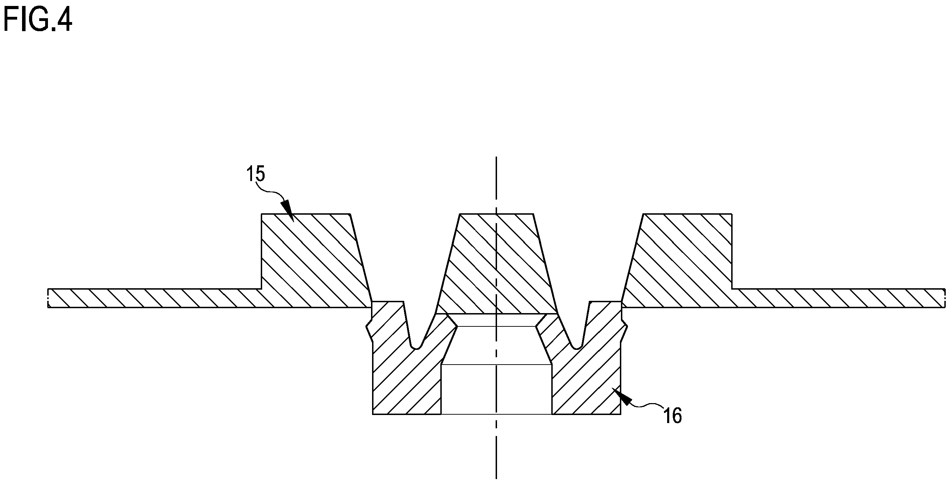

In fact, at least such concave portion 115, together with all the cavities 105 of the mould 1, will be filled with the moulding material and at the end of the moulding step, for example preferably by injection, will give rise to a "disk-shaped" support 15 made in one piece with said plurality of gaskets 16 (see figures 3 and 4).

In other words, the mould 101 depicted in figure 3 comprises a plurality of housing cavities 105 each made in a single solid body, and a corresponding plurality of clamping portions 106 complementary to such cavity 105, for the simultaneous production of a plurality of gaskets 16, each of which has a substantially cylindrical geometry depicted in figure 2 with a generally annular section, of the type comprising, along its own axis of symmetry, a base end 9 and a top end 10 joined together by an outer side surface 11 and an inner side surface 12, a first annular lip 13 (or annular sharp-corner edge) jutting externally from the outer side surface 11 of the same gasket 16 and a second annular lip 14 (or annular sharp-corner edge) jutting internally from the inner side surface 12.

This mould 101 further comprises at least one concave portion 115 which is connected, when the movable 102 and fixed 103 parts of the mould 101 are coupled to each other in abutment and therefore the mould 101 is closed, to the aforesaid plurality of housing cavities 105 in such a way as to constitute a suitable partitioning gap between the movable 102 and fixed 103 parts of the mould 101 and thus to make, at the end of the moulding step, preferably by injecting under pressure the moulding material, preferably polymeric/elastomeric, a support 15 made in one piece with said plurality of gaskets 16, as depicted in figure 4.

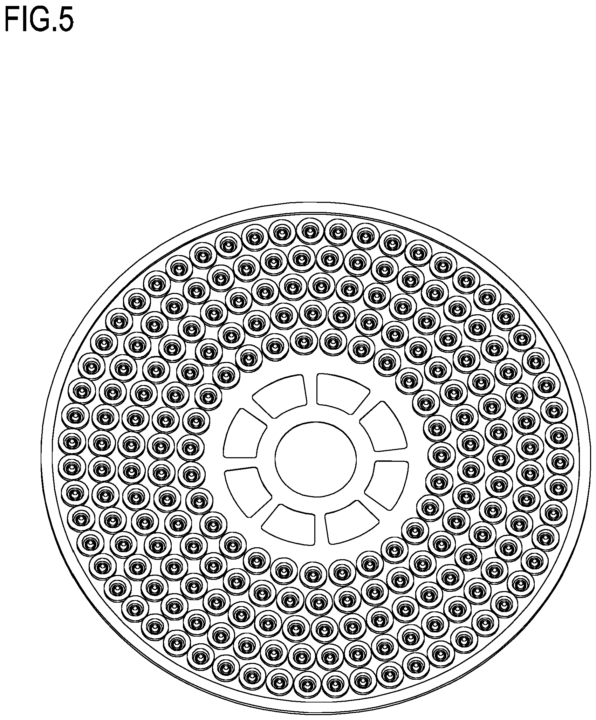

In other words, the mould 101 according to the particular embodiment shown in figure 3, by providing for a partitioning gap 115 between the movable and fixed parts 102, 103 of such mould 101, allows to achieve a plurality of gaskets 16 constrained to each other by a support 15 at the end of the moulding step, as can be seen in figure 5.

This solution allows to optimize the times and methods of use of the mould 101, thus allowing the simultaneous production of a plurality of gaskets 16 at each complete cycle of the moulding method, for example and preferably of the injection type, with a very accurate quality control with regard to dimensional tolerances and possible surface defects.

Thus, by using the mould 101, as can be noted from figures 4 and 5, each gasket 16, for example of the type depicted in figure 2 and figure 6, is connected to the adjacent gaskets 16 by a substantially "disk-shaped" support 15 made in one piece with such gaskets 16 and comprising a portion joining together parts of the top end 10 of each gasket 16. However, note that such support 15 does not affect the outer and inner lips 13, 14 of each gasket 16, so that the removal of the gaskets 16 from the respective support 15 does not involve such lips 13, 14, which therefore do not require further finishing to definitively achieve the respective gasket 16.

Thanks to the moulds 1 and 101, it is therefore possible to carry out the moulding method according to a preferred aspect of the present invention.

Such method is in fact aimed at producing one or more gaskets 16, which have a substantially cylindrical shape with a generally annular section, such as the one depicted for example in figure 2 and figure 6, each of which comprises, upon sliding along the axis of symmetry of this gasket 16, a base end 9 and a top end 10 joined by an outer, longitudinally extending, side surface 11 and an inner, longitudinally extending, side surface 12, a first annular lip 13 jutting externally from the outer side surface 11 and a second annular lip 14 jutting internally from the inner side surface 12, preferably, but not necessarily, near or at the aforesaid top end 10. This method, according to an aspect of the present invention and with reference first to the simplified mould 1 of figure 1, comprises in sequence the steps of:
- preparing the aforementioned mould 1 with a fixed part 3 and a movable part 2, which can be coupled together in abutment along a closing surface 4;
- closing the mould 1 by sealingly coupling the fixed part 3 and the movable part 2 of the mould 1 to one another;
- moulding, for example by injecting under pressure or by compression, a moulding material between the fixed part 3 and the movable part 2 of the mould 1 for making the aforesaid gasket 16;
- opening the mould 1, by separating the respective fixed part 3 from the corresponding movable part 2; and
- removing the moulded gasket 16.

As set forth above, the fixed part 3 or the movable part 2 of the mould 1 comprises, as stated, at least one housing cavity 5 of the moulding material and the movable part 2, or the fixed part 3, of the mould 1 comprises at least one flat or convex clamping portion 6 complementary to said housing cavity 5, and wherein such at least one housing cavity 5 of the moulding material is made in a single solid body, preferably, but not necessarily, from solid.

The method, according to an advantageous aspect of the present invention, further provides that such housing cavity 5 is characterised by a first undercut 13', which extends circumferentially to allow the making of said first lip 13 jutting from the outermost surface 11 of the gasket 16, once the moulding has been carried out, and/or a second undercut 14' extending circumferentially to allow the making of said second lip 14, or angled edge, jutting from the innermost surface 12 of the gasket 16, once the moulding has ended.

The method requires that the previously mentioned closing surface 4 between the two parts of the mould 1 comprise at least the aforesaid clamping portion 6 which delimits the top end 10 of the gasket 16, which end is essentially defined by the housing cavity 5 of the mould 1 (in addition to the clamping portion 6).

Even such clamping portion 6 can also be preferably, but not necessarily, made from solid, in a single solid body.

It should be noted that, as will become clear to the one skilled in the art, the step of moulding a moulding material between the fixed part 3 and the movable part 2 of the mould 1, in order to form the aforesaid gasket 16, can be selected from a step of injection moulding, comprising a step of injecting under pressure, or sending, a moulding material in the fluid state into/to said mould 1 after the step of closing the mould 1, and a step of compression moulding, comprising a step of feeding a moulding material between the fixed part 3 and the movable part 2 of the mould 1, before the step of closing the same mould 1, which in this case causes the moulding of the gasket 16.

At the end of the method for moulding, for example and preferably, injection moulding, the moulding material consisting, by way of example, of a polymeric material such as a nitrile rubber (NBR) or other elastomeric material, the method provides, in one of its particular embodiments, that when the mould 1 is opened, and therefore following the separation of the fixed part 3 from the movable part 2 of such mould 1, the moulded gasket 16 can be removed, for example, thanks to the aid of a jet of compressed air emitted at the gasket 16 within the aforesaid cavity 5 of the mould 1.

The method is applied, in an entirely equivalent and recurring manner, to a mould 101 of the type depicted for example in figure 3, comprising a movable part 102 and a fixed part 103, wherein a plurality of housing cavities 105 and a corresponding plurality of clamping portions 106 complementary to said cavities 105 are each made in a single solid body, for simultaneously producing a plurality of gaskets 16.

In this case, as stated, the mould 101 can comprise at least one concave portion 115 connected, when the mould 101 is closed, to the aforesaid plurality of housing cavities 105, which constitutes a partitioning gap between the movable 102 and fixed 103 parts of the mould 101, to allow the making of a support 15 made in one piece with said plurality of gaskets 16, at the end of the moulding step, for example carried out by injecting under pressure a polymeric moulding material.

It should be noted that also in this implementation of the method depicted herein, the moulding by which the aforesaid plurality of gaskets 16 are made can be of the type injecting under pressure a polymeric/elastomeric material, with the mould 101 closed, or it can be of the type compressing a polymeric/elastomeric material inserted with the mould 101 open, wherein the closing of the mould 101 causes the moulding of the polymeric/elastomeric material.

In this particular embodiment, the method provides for the step of removing the plurality of moulded gaskets 16 from the respective cavities 105 of the mould 101 with a step of emitting a jet of compressed air at said plurality of gaskets 16 and the respective support 15, which are placed in the mould 101.

The method may further comprise, at the end of such removing step from the mould 101, a step of detaching the gaskets 16 from said support 15 by eliminating the filler moulding material of a segment-like shape, which constitutes the support 15, through a low-intensity mechanic action (for example, punching by calibrated matched-mould, blanking, cryogenic deburring, grinding, cutting or other).

Finally, the method is preferably carried out through injection moulding under pressure, which uses as preferred moulding material a polymeric material consisting of a nitrile rubber (NBR- Nitrile-Butadiene Rubber) or other elastomeric material such as, by way of example, hydrogenated nitrile rubber (HNBR - Hydrogenated Nitrile-Butadiene Rubber), silicone rubber (VMQ - Vinyl methyl Silicone), fluorinated rubber (FKM - Fluoroelastomer, Viton^{®}).

## Claims

1. Method for producing at least one substantially cylindrical gasket, preferably with a generally annular section, of the type comprising, along the axis of symmetry of the gasket (16), a base end (9) and a top end (10) joined by an outer side surface (11) and an inner side surface (12), a first annular lip (13) jutting externally from the outer side surface (11) of the gasket (16) and a second annular lip (14) jutting internally from the inner side surface (12), the method comprising in sequence the steps of:
• preparing a mould (1) with a fixed part (3) and a movable part (2), which can be coupled together in abutment along a closing surface (4);
• closing the mould (1) by sealingly coupling the fixed part (3) and the movable part (2) of the mould (1) to one another;
• moulding a moulding material between the fixed part (3) and the movable part (2) of the mould (1) for making said gasket (16);
• opening the mould (1) by separating the respective fixed part (3) from the movable part (2);
• removing the moulded gasket (16);
wherein the fixed part (3), or the movable part (2), of the mould (1) comprises at least one housing cavity (5) of the moulding material and the movable part (2), or the fixed part (3), of the mould (1) comprises at least one flat or convex clamping portion (6) complementary to said housing cavity (5),
**characterised in that** said at least one flat or convex clamping portion (6), delimits the aforesaid top end (10) of the gasket (16) and said at least one housing cavity (5) has substantially the negative shape of said gasket (16) to be moulded, and is made in a single solid body, so that the entire impression of the gasket (16) to be moulded, defined by such cavity (5), is made in a continuous solid.

2. Method according to claim 1, wherein said housing cavity (5) of the moulding material comprises at least one undercut (13'), which extends circumferentially for making said externally-jutting first lip (13) of the gasket (16) and/or at least one undercut (14'), which extends circumferentially for making said internally-jutting second lip (14) of the gasket (16).

3. Method according to claim 1 or 2, wherein said first lip (13) and/or said second lip (14) of the gasket (16) are/is placed near said top end (10).

4. Method according to any one of the preceding claims, wherein said step of moulding a moulding material is selected from an injection moulding step, comprising a step of injecting under pressure, or sending, a moulding material in the fluid state within said mould (1) after said step of closing the mould (1), and a compression moulding step, comprising a step of feeding a moulding material between the fixed part (3) and the movable part (2) of said mould (1) before said step of closing the mould (1).

5. Method according to any one of the preceding claims, wherein said step of removing the moulded gasket (16) comprises a step of emitting a jet of compressed air at the gasket (16) within the aforesaid cavity (5) of the mould (1).

6. Method according to any one of the preceding claims, wherein said mould (101) comprises a plurality of housing cavities (105) and a corresponding plurality of clamping portions (106) complementary to said cavities (105) for simultaneously producing a plurality of gaskets (16), wherein said mould (101) comprises at least one concave portion (115) connected, when the mould (1) is closed, to said plurality of housing cavities (105), for making, at the end of said step of moulding a moulding material, a support (15) made in one piece with said plurality of gaskets (16), and wherein each cavity (105) of said plurality of housing cavities (105) is made in a single solid body.

7. Method according to claim 6, wherein the step of removing the plurality of moulded gaskets (16) comprises the removal of said plurality of gaskets (16) from the respective cavities of the mould (101) with a step of emitting a jet of compressed air at said plurality of gaskets (16) and at the respective said support (15) within said cavities (105) of the mould (1), and wherein at the end of this removing step, a step of detaching the gaskets (16) from said support (15) is provided.

8. Method according to any one of the preceding claims, wherein the moulding material is a Nitrile-Butadiene-Rubber (NBR).

9. Mould (1) for making at least one substantially cylindrical gasket (16), preferably with a generally annular section, of the type comprising, along the axis of symmetry of the gasket (16), a base end (9) and a top end (10) joined by an outer side surface (11) and an inner side surface (12), a first annular lip (13) jutting externally from the outer side surface (11) of the gasket and a second annular lip (14) jutting internally from the inner side surface (12), wherein said mould (1) further comprises a fixed part (3) and a movable part (2) which can be coupled in abutment along a closing surface (4), said fixed part (3), or said movable part (2), of the mould (1) comprising at least one housing cavity (5) to house the moulding material and said movable part (2), or said fixed part (3), of the mould (1) comprising at least one clamping portion (6), flat or convex, complementary to said at least one housing cavity (5), **characterised in that** the aforesaid closing surface (4) comprises said at least one clamping portion (6) and delimits the aforesaid top end (10) of the gasket (16) defined by said at least one housing cavity (5), and said at least one housing cavity (5) is made in a single solid body and has substantially the negative shape of said gasket (16) to be moulded, so that the entire impression of the gasket (16) to be moulded, defined by such cavity (5), is made in a continuous solid body.

10. Mould (1) according to claim 9, **characterised in that** said housing cavity (5) of the moulding material comprises at least one undercut (13'), which extends circumferentially for making said externally-jutting first lip (13) of the gasket (16) and/or at least one undercut (14'), which extends circumferentially for making said internally-jutting second lip (14) of the gasket (16).

11. Mould (1) according to claim 9 or 10, wherein said first lip (13) and/or said second lip (14) of the gasket (16) are/is placed near said top end (10).

12. Mould (1) according to claim 9, 10 or 11, wherein said fixed part (3) of the mould (1), or said movable part (2), comprises a removable insert (7) comprising said housing cavity (5) of the polymeric material.

13. Mould (1) according to any one of claims 9 to 12, wherein said movable part (2) of the mould (1), or said fixed part (3), comprises a removable insert (8) comprising said flat or convex clamping portion (6) complementary to said housing cavity (5).

14. Mould (101) according to any one of claims 9 to 13, wherein said mould (101) comprises a plurality of housing cavities (105) and a corresponding plurality of clamping portions (106) complementary to said cavities (105) for simultaneously producing a plurality of gaskets (16), wherein said mould (1) further comprises at least one concave portion (115) connected, when the mould (101) is closed, to said plurality of housing cavities (105), for making, at the end of said step of moulding a moulding material, a support (15) made in one piece with said plurality of gaskets (16), each cavity of said plurality of housing cavities (105) being made in a single solid body.

15. Mould (1) according to any one of claims 9 to 14, wherein said mould (1) is removably inserted in an apparatus for the injection moulding of polymeric materials, preferably NBR, Nitrile-Butadiene-Rubber.

## Patentansprüche

1. Verfahren zur Herstellung von mindestens einer im Wesentlichen zylindrischen Dichtung, vorzugsweise mit einem im Allgemeinen ringförmigen Abschnitt, des Typs, der entlang der Symmetrieachse der Dichtung (16) ein Basisende (9) und ein oberes Ende (10) umfasst, die durch eine äußere Seitenfläche (11) und eine innere Seitenfläche (12) verbunden sind, wobei eine erste ringförmige Lippe (13) nach außen von der äußeren Seitenfläche (11) der Dichtung (16) vorsteht und eine zweite ringförmige Lippe (14) nach innen von der inneren Seitenfläche (12) vorsteht, wobei das Verfahren nacheinander die Schritte umfasst:
• Vorbereiten einer Form (1) mit einem feststehenden Teil (3) und einem beweglichen Teil (2), die entlang einer Verschlussfläche (4) auf Stoß miteinander gekoppelt werden können;
• Schließen der Form (1) durch dichtendes Koppeln des feststehenden Teils (3) und des beweglichen Teils (2) der Form (1) miteinander;
• Formen eines Formmaterials zwischen dem feststehenden Teil (3) und dem beweglichen Teil (2) der Form (1) zum Herstellen der Dichtung (16);
• Öffnen der Form (1) durch Trennen des jeweiligen feststehenden Teils (3) vom beweglichen Teil (2);
• Entfernen der geformten Dichtung (16);
wobei der feststehende Teil (3) oder der bewegliche Teil (2) der Form (1) mindestens eine Aufnahmehöhlung (5) des Formmaterials umfasst und der bewegliche Teil (2) oder der feste Teil (3) der Form (1) mindestens einen flachen oder konvexen Klemmabschnitt (6) umfasst, der komplementär zu der Aufnahmehöhlung (5) ist,
**dadurch gekennzeichnet, dass** der mindestens eine flache oder konvexe Klemmabschnitt (6) das mindestens eine obere Ende (10) der Dichtung (16) begrenzt und die mindestens eine Aufnahmehöhlung (5) im Wesentlichen die negative Form der zu formenden Dichtung (16) aufweist und aus einem einzigen festen Körper besteht, so dass der gesamte Eindruck der zu formenden Dichtung (16), der durch die Höhlung (5) definiert ist, zu einem kontinuierlichen Festkörper gebildet ist.

2. Verfahren nach Anspruch 1, wobei die Aufnahmehöhlung (5) des Formmaterials mindestens eine Hinterschneidung (13') aufweist, die sich in Umfangsrichtung erstreckt, um die nach außen vorstehende erste Lippe (13) der Dichtung (16) herzustellen, und/oder mindestens eine Hinterschneidung (14') aufweist, die sich in Umfangsrichtung erstreckt, um die nach innen vorstehende zweite Lippe (14) der Dichtung (16) herzustellen.

3. Verfahren nach Anspruch 1 oder 2, wobei die erste Lippe (13) und/oder die zweite Lippe (14) der Dichtung (16) in der Nähe des oberen Endes (10) platziert werden/ist.

4. Verfahren nach einem der vorhergehenden Ansprüche, wobei der Schritt des Formens eines Formmaterials ausgewählt ist aus einem Spritzgussschritt, der einen Schritt des Einspritzens unter Druck oder des Einführens eines Formmaterials im flüssigen Zustand in die Form (1) nach dem Schritt des Schließens der Form (1) umfasst, und einem Kompressionsformschritt, der einen Schritt des Zuführens eines Formmaterials zwischen den feststehenden Teil (3) und den beweglichen Teil (2) der Form (1) vor dem Schritt des Schließens der Form (1) umfasst.

5. Verfahren nach einem der vorhergehenden Ansprüche, wobei der Schritt des Entfernens der geformten Dichtung (16) einen Schritt des Ausstoßens eines Druckluftstrahls auf die Dichtung (16) innerhalb der Aufnahmehöhlung (5) der Form (1) umfasst.

6. Verfahren nach einem der vorhergehenden Ansprüche, wobei die Form (101) eine Vielzahl von Aufnahmehöhlungen (105) und eine entsprechende Vielzahl von Klemmabschnitten (106) umfasst, die zu den Höhlungen (105) komplementär sind, um gleichzeitig eine Vielzahl von Dichtungen (16) herzustellen, wobei die Form (101) mindestens einen konkaven Abschnitt (115) umfasst, der bei geschlossener Form (1) mit der Vielzahl von Aufnahmehöhlungen (105) verbunden ist, um am Ende des Schritts des Formens eines Formmaterials eine Stütze (15) herzustellen, die aus einem Stück mit der Vielzahl von Dichtungen (16) gefertigt ist, und wobei jede Höhlung (105) der Vielzahl von Aufnahmehöhlungen (105) aus einem einzigen festen Körper gefertigt ist.

7. Verfahren nach Anspruch 6, wobei der Schritt des Entfernens der Vielzahl von geformten Dichtungen (16) das Entfernen der Vielzahl von Dichtungen (16) aus den jeweiligen Höhlungen der Form (101) mit einem Schritt des Ausstoßens eines Druckluftstrahls auf die Vielzahl von Dichtungen (16) und auf die jeweilige Stütze (15) innerhalb der Höhlungen (105) der Form (1) umfasst, und wobei am Ende dieses Entfernungsschritts ein Schritt des Ablösens der Dichtungen (16) von der Stütze (15) vorgesehen ist.

8. Verfahren nach einem der vorhergehenden Ansprüche, wobei das Formmaterial ein Nitril-Butadien-Kautschuk (NBR) ist.

9. Form (1) zur Herstellung von mindestens einer im Wesentlichen zylindrischen Dichtung (16), vorzugsweise mit einem im Allgemeinen ringförmigen Abschnitt, der Art, die entlang der Symmetrieachse der Dichtung (16) ein Basisende (9) und ein oberes Ende (10) umfasst, die durch eine äußere Seitenfläche (11) und eine innere Seitenfläche (12) verbunden sind, wobei eine erste ringförmige Lippe (13) nach außen von der äußeren Seitenfläche (11) der Dichtung vorsteht und eine zweite ringförmige Lippe (14) nach innen von der inneren Seitenfläche (12) vorsteht, wobei die Form (1) außerdem einen feststehenden Teil (3) und einen beweglichen Teil (2) umfasst, die entlang einer Verschlussfläche (4) auf Stoß gekoppelt werden können, wobei der feststehende Teil (3) oder der bewegliche Teil (2) der Form (1) mindestens eine Aufnahmehöhlung (5) zur Aufnahme des Formmaterials umfasst und der bewegliche Teil (2) oder der feststehende Teil (3) der Form (1) mindestens einen Klemmabschnitt (6) umfasst, der flach oder konvex ist und komplementär zu der mindestens einen Aufnahmehöhlung (5) ist, **dadurch gekennzeichnet, dass** der Verschlussfläche (4) den mindestens einen Klemmabschnitt (6) umfasst und das obere Ende (10) der Dichtung (16) begrenzt, das durch die mindestens eine Aufnahmehöhlung (5) definiert ist, und die mindestens eine Aufnahmehöhlung (5) aus einem einzigen festen Körper besteht und im Wesentlichen die negative Form der zu formenden Dichtung (16) aufweist, so dass der gesamte Eindruck der zu formenden Dichtung (16), der durch die Höhlung (5) definiert ist, zu einem kontinuierlichen Festkörper gebildet ist.

10. Form (1) nach Anspruch 9, **dadurch gekennzeichnet, dass** die Aufnahmehöhlung (5) des Formmaterials mindestens eine Hinterschneidung (13') aufweist, die sich in Umfangsrichtung erstreckt, um die nach außen vorstehende erste Lippe (13) der Dichtung (16) herzustellen, und/oder mindestens eine Hinterschneidung (14') aufweist, die sich in Umfangsrichtung erstreckt, um die nach innen vorstehende zweite Lippe (14) der Dichtung (16) herzustellen.

11. Form (1) nach Anspruch 9 oder 10, wobei die erste Lippe (13) und/oder die zweite Lippe (14) der Dichtung (16) in der Nähe des oberen Endes (10) angeordnet sind/ist.

12. Form (1) nach Anspruch 9, 10 oder 11, wobei der feststehende Teil (3) der Form (1) oder der bewegliche Teil (2) einen entfernbaren Einsatz (7) umfasst, der die Aufnahmehöhlung (5) des Polymermaterials umfasst.

13. Form (1) nach einem der Ansprüche 9 bis 12, wobei der bewegliche Teil (2) der Form (1) oder der feststehende Teil (3) einen entfernbaren Einsatz (8) umfasst, der den flachen oder konvexen Klemmabschnitt (6) umfasst, der komplementär zu der Aufnahmehöhlung (5) ist.

14. Form (101) nach einem der Ansprüche 9 bis 13, wobei die Form (101) eine Vielzahl von Aufnahmehöhlungen (105) und eine entsprechende Vielzahl von Klemmabschnitten (106) umfasst, die zu den Höhlungen (105) komplementär sind, um gleichzeitig eine Vielzahl von Dichtungen (16) herzustellen, wobei die Form (1) außerdem mindestens einen konkaven Abschnitt (115) umfasst, der bei geschlossener Form (101) mit der Vielzahl von Aufnahmehöhlungen (105) verbunden ist, um am Ende des Schritts des Formens eines Formmaterials eine Stütze (15) herzustellen, die aus einem Stück mit der Vielzahl von Dichtungen (16) gefertigt ist, wobei jeder Hohlraum der Vielzahl von Aufnahmehöhlungen (105) aus einem einzigen festen Körper gefertigt ist.

15. Form (1) nach einem der Ansprüche 9 bis 14, wobei die Form (1) entfernbar in eine Vorrichtung zum Spritzgießen von Polymermaterialien, vorzugsweise NBR, Nitril-Butadien-Kautschuk, eingesetzt ist.

## Revendications

1. Procédé de fabrication d'au moins un joint sensiblement cylindrique, de préférence à section généralement annulaire, du type comprenant, le long de l'axe de symétrie du joint (16), une extrémité de base (9) et une extrémité supérieure (10) reliées par une surface latérale extérieure (11) et une surface latérale intérieure (12), une première lèvre annulaire (13) faisant saillie extérieurement par rapport à la surface latérale extérieure (11) du joint (16) et une deuxième lèvre annulaire (14) faisant saillie intérieurement par rapport à la surface latérale intérieure (12), le procédé comprenant dans l'ordre les étapes consistant à :
• préparer un moule (1) avec une partie fixe (3) et une partie mobile (2), qui peuvent être accouplées en butée le long d'une surface de fermeture (4) ;
• fermer le moule (1) en accouplant de manière étanche la partie fixe (3) et la partie mobile (2) du moule (1) l'une à l'autre ;
• mouler un matériau de moulage entre la partie fixe (3) et la partie mobile (2) du moule (1) pour fabriquer ledit joint (16) ;
• ouvrir le moule (1) en séparant la partie fixe (3) de la partie mobile (2) ;
• retirer le joint moulé (16) ;
dans lequel la partie fixe (3), ou la partie mobile (2), du moule (1) comprend au moins une cavité de logement (5) du matériau de moulage et la partie mobile (2), ou la partie fixe (3), du moule (1) comprend au moins une portion de serrage plate ou convexe (6) complémentaire à ladite cavité de logement (5),
**caractérisé en ce que** ladite au moins une portion de serrage (6), plate ou convexe, délimite l'extrémité supérieure (10) susmentionnée du joint (16) et que ladite au moins une cavité de logement (5) a sensiblement la forme négative dudit joint (16) à mouler, et est réalisée dans un seul corps solide, de sorte que l'empreinte entière du joint (16) à mouler, définie par cette cavité (5), est réalisée dans un solide continu.

2. Procédé selon la revendication 1, dans lequel ladite cavité de logement (5) du matériau de moulage comprend au moins une contre-dépouille (13') qui s'étend circonférentiellement pour réaliser ladite première lèvre (13) du joint (16) en saillie extérieure et/ou au moins une contre-dépouille (14') qui s'étend circonférentiellement pour réaliser ladite deuxième lèvre (14) en saillie intérieure du joint (16).

3. Procédé selon la revendication 1 ou 2, dans lequel ladite première lèvre (13) et/ou ladite deuxième lèvre (14) du joint (16) sont placées près de ladite extrémité supérieure (10).

4. Procédé selon l'une quelconque des revendications précédentes, dans lequel ladite étape de moulage d'un matériau de moulage est choisie parmi une étape de moulage par injection, comprenant une étape d'injection sous pression, ou d'envoi, d'un matériau de moulage à l'état fluide à l'intérieur dudit moule (1) après ladite étape de fermeture du moule (1), et une étape de moulage par compression, comprenant une étape d'alimentation d'un matériau de moulage entre la partie fixe (3) et la partie mobile (2) dudit moule (1) avant ladite étape de fermeture du moule (1).

5. Procédé selon l'une quelconque des revendications précédentes, dans lequel ladite étape de retrait du joint moulé (16) comprend une étape d'émission d'un jet d'air comprimé sur le joint (16) à l'intérieur de la cavité (5) susmentionnée du moule (1).

6. Procédé selon l'une quelconque des revendications précédentes, dans lequel ledit moule (101) comprend une pluralité de cavités de logement (105) et une pluralité correspondante de portions de serrage (106) complémentaires auxdites cavités (105) pour produire simultanément une pluralité de joints (16), dans lequel ledit moule (101) comprend au moins une portion concave (115) reliée, lorsque le moule (1) est fermé, à ladite pluralité de cavités de logement (105), pour fabriquer, à l'issue de ladite étape de moulage d'un matériau de moulage, un support (15) fait d'une seule pièce avec ladite pluralité de joints (16), et dans lequel chaque cavité (105) de ladite pluralité de cavités de logement (105) est faite d'un seul corps solide.

7. Procédé selon la revendication 6, dans lequel l'étape de retrait de la pluralité de joints moulés (16) comprend le retrait de ladite pluralité de joints (16) des cavités respectives du moule (101) avec une étape d'émission d'un jet d'air comprimé sur ladite pluralité de joints (16) et sur ledit support (15) respectif à l'intérieur desdites cavités (105) du moule (1), et dans lequel à la fin de cette étape de retrait, une étape de détachement des joints (16) dudit support (15) est prévue.

8. Procédé selon l'une quelconque des revendications précédentes, dans lequel le matériau de moulage est un caoutchouc nitrile-butadiène (NBR).

9. Moule (1) pour la réalisation d'au moins un joint (16) sensiblement cylindrique, de préférence à section généralement annulaire, du type comprenant, le long de l'axe de symétrie du joint (16), une extrémité de base (9) et une extrémité supérieure (10) reliées par une surface latérale extérieure (11) et une surface latérale intérieure (12), une première lèvre annulaire (13) faisant saillie extérieurement de la surface latérale extérieure (11) du joint et une deuxième lèvre annulaire (14) faisant saillie intérieurement de la surface latérale intérieure (12), dans lequel ledit moule (1) comprend en outre une partie fixe (3) et une partie mobile (2) pouvant être accouplée en butée le long d'une surface de fermeture (4), ladite partie fixe (3), ou ladite partie mobile (2), du moule (1) comprenant au moins une cavité de logement (5) pour loger le matériau de moulage et ladite partie mobile (2), ou ladite partie fixe (3), du moule (1) comprenant au moins une portion de serrage (6), plane ou convexe, complémentaire à ladite au moins une cavité de logement (5), **caractérisé en ce que** la surface de fermeture précitée (4) comprend ladite au moins une portion de serrage (6) et délimite l'extrémité supérieure précitée (10) du joint (16) définie par ladite au moins une cavité de logement (5), et ladite au moins une cavité de logement (5) est réalisée dans un seul corps solide et a sensiblement la forme négative dudit joint (16) à mouler, de sorte que l'empreinte entière du joint (16) à mouler, définie par une telle cavité (5), est réalisée dans un corps solide continu.

10. Moule (1) selon la revendication 9, **caractérisé en ce que** ladite cavité de logement (5) du matériau de moulage comprend au moins une contre-dépouille (13') qui s'étend circonférentiellement pour réaliser ladite première lèvre (13) du joint (16) en saillie extérieure et/ou au moins une contre-dépouille (14') qui s'étend circonférentiellement pour réaliser ladite deuxième lèvre (14) en saillie intérieure du joint (16).

11. Moule (1) selon la revendication 9 ou 10, dans lequel ladite première lèvre (13) et/ou ladite deuxième lèvre (14) du joint (16) est/sont placée(s) près de ladite extrémité supérieure (10).

12. Moule (1) selon la revendication 9, 10 ou 11, dans lequel ladite partie fixe (3) du moule (1), ou ladite partie mobile (2), comprend un insert amovible (7) comprenant ladite cavité de logement (5) du matériau polymère.

13. Moule (1) selon l'une quelconque des revendications 9 à 12, dans lequel ladite partie mobile (2) du moule (1), ou ladite partie fixe (3), comporte un insert amovible (8) comprenant ladite portion de serrage plate ou convexe (6) complémentaire à ladite cavité de logement (5).

14. Moule (101) selon l'une quelconque des revendications 9 à 13, dans lequel ledit moule (101) comprend une pluralité de cavités de logement (105) et une pluralité de portions de serrage correspondante (106) complémentaires auxdites cavités (105) pour produire simultanément une pluralité de joints (16), dans lequel ledit moule (1) comprend en outre au moins une portion concave (115) reliée, lorsque le moule (101) est fermé, à ladite pluralité de cavités de logement (105), pour fabriquer, à la fin de ladite étape de moulage d'un matériau de moulage, un support (15) fait d'une seule pièce avec ladite pluralité de joints (16), chaque cavité de ladite pluralité de cavités de logement (105) étant faite d'un seul corps solide.

15. Moule (1) selon l'une quelconque des revendications 9 à 14, dans lequel ledit moule (1) est inséré de manière amovible dans un appareil de moulage par injection de matériaux polymères, de préférence NBR, caoutchouc nitrile-butadiène.
